# FASCICULE DE BREVET EUROPEEN

(11) **EP 2 991 832 B1**
(45) Date de publication et mention de la délivrance du brevet: **05.04.2017**
(21) Numéro de dépôt: 14741930.3
(22) Date de dépôt: 12.05.2014
(51) Int. Cl.: B41J 3/407

(54) **SYSTEME ET PROCEDE D'IMPRESSION POUR APPLIQUER UN DESSIN SUR AU MOINS UNE SURFACE D'ONGLE**
DRUCKSYSTEM UND VERFAHREN ZUM AUFBRINGEN EINES DESIGNS AUF MINDESTENS EINER FINGERNAGEL-/FUSSNAGELOBERFLÄCHE
PRINTING SYSTEM AND METHOD FOR APPLYING A DESIGN TO AT LEAST ONE FINGERNAIL/TOENAIL SURFACE

(30) Priorité: 07.08.2013 FR 1357853
(43) Date de publication de la demande: 09.03.2016
(73) Titulaire: Nailae Technology Limited, Mahé (SC)
(72) Inventeur: LEGALLAIS, Alexandre, 33200 Bordeaux (FR)
(74) Mandataire: Roman, Alexis
(86) Numéro de dépôt international: PCT/FR2014/051094
(87) Numéro de publication internationale: WO 2015/018987

(56) Documents cités:
- US-A- 6 067 996
- US-A1- 2006 087 686

## Description

### Domaine technique de l'invention.

L'invention concerne un système et un procédé d'impression pour appliquer un dessin sur au moins une surface d'ongle.

L'invention concerne le domaine technique de la manucure, et plus particulièrement des appareils de manucure, du type imprimante, permettant d'appliquer sur des ongles des dessins complexes, personnalisés, détaillés, multicolores.

### État de la technique.

On connait par les documents brevets US 6.067.996 (WEBER), US 2013/019799 (BITHO) ou encore EP 1.204.340 (PEARL TECHNOLOGY) décrivent des appareils permettant d'appliquer un dessin sur au moins une surface d'ongle.

Ce type d'appareil comporte un guide permettant de positionner au moins une surface d'ongle au niveau d'une tête d'impression généralement montée sur rail et apte à être déplacée. Un dispositif optique de type caméra permet d'acquérir une image de la surface d'ongle. Lorsque l'utilisateur a sélectionné un dessin, une unité de contrôle pilote le déplacement de la tête d'impression en fonction de l'image de la surface d'ongle acquise et en fonction dudit dessin, de façon à ce que ladite tête applique ledit dessin sur la surface d'ongle.

Ce type d'appareil est globalement satisfaisant, notamment parce qu'il permet d'appliquer sur la surface de l'ongle, un dessin de manière très précise. L'utilisateur peut donc parer ses ongles de motifs originaux, multiformes et multicolores, qu'il n'est pas envisageable d'obtenir manuellement. Toutefois, le nombre de dessins mis à la disposition de l'utilisateur est généralement restreint, car faisant partie d'une base de données (ou « bibliothèque») dont le contenu est limité et contrôlé.

Un système d'impression selon le préambule de la revendication 1 est divulgué dans le document US 6 067 996 A.

Le but de l'invention est de remédier à cet état des choses. En particulier, un objectif de l'invention est d'augmenter rapidement et simplement le nombre de dessins susceptibles d'être mis à la disposition des utilisateurs.

### Divulgation de l'invention.

La solution proposée par l'invention est un système d'impression comprenant au moins un appareil pour appliquer un dessin sur au moins une surface d'ongle, lequel appareil comporte :
- des moyens pour positionner au moins une surface d'ongle,
- un dispositif optique pour acquérir une image de la surface d'ongle,
- une tête d'impression,
- des moyens pour déplacer la tête d'impression afin d'appliquer un dessin sur la surface d'ongle,
- une unité de contrôle intégrant :
   ∘ un moyen pour communiquer avec le dispositif optique,
   ∘ une application informatique comprenant des instructions pour commander les moyens de déplacement en fonction de l'image de la surface d'ongle acquise et en fonction du dessin, de façon à diriger la tête d'impression afin qu'elle applique ledit dessin sur la surface d'ongle.

Les caractéristiques remarquables de l'invention sont les suivantes :
- le système comporte:
   ∘ au moins un serveur distant de l'appareil, lequel serveur intègre au moins une base de données dans laquelle sont enregistrées des données numériques,
   ∘ une série de terminaux appartenant à une communauté d'utilisateurs, chaque dit terminal intégrant au moins un moyen pour générer un dessin sous forme de données numériques, chaque dit terminal comportant en outre un moyen pour communiquer, par l'intermédiaire d'un réseau internet, avec le serveur distant, de sorte que lesdites données générées soient transmises audit serveur distant,
- le serveur distant intègre une application informatique comprenant des instructions pour stocker de manière hiérarchisée les données numériques reçues, lesdites données étant stockées dans des zones mémoires de la base de données, lesquelles zones mémoires sont associées à chacun des utilisateurs de la communauté et sont accessibles par mot de passe et/ou identifiant,
- l'unité de contrôle se présente sous la forme d'une tablette tactile connectée de manière amovible sur l'appareil, laquelle tablette comporte un moyen pour communiquer, par l'intermédiaire d'un réseau internet, avec le serveur distant, de sorte que ladite tablette puisse accéder à au moins une des zones mémoires et télécharger les données numériques qui y sont stockées, lesquelles données téléchargées correspondent au dessin à appliquer sur la surface d'ongle.

Grâce à l'invention, la communauté d'utilisateurs peut personnaliser et enrichir de manière illimitée et en temps réel la base de données du serveur distant. Chaque utilisateur peut ensuite se connecter, via sa tablette tactile, au serveur distant et avoir accès à tout ou partie de dessins enregistrés dans cette base de données. Par rapport aux appareils précités de l'art antérieur, la base de données « dessins » est beaucoup plus importante.

D'autres caractéristiques avantageuses de l'invention sont listées ci-dessous, chacune de ces caractéristiques pouvant être considérée seule ou en combinaison avec les caractéristiques remarquables définies ci-dessus :
- La tablette tactile affiche avantageusement les données numériques contenues dans la zone mémoire du serveur distant, sous forme de dessins accessibles dans une bibliothèque numérique.
- La tablette tactile peut intégrer une application informatique comprenant des instructions pour : commander le dispositif optique pour acquérir, sous forme de données numériques, une image de la surface d'ongle sur laquelle est appliqué le dessin ; et transférer au serveur distant, les données numériques acquises.
- Le serveur distant intègre avantageusement une application informatique comprenant des instructions pour stocker les données numériques reçues, soit dans la zone mémoire associée à l'utilisateur de la tablette tactile connectée à l'appareil, soit dans chacune des zones mémoires, soit dans les zones mémoires d'utilisateurs préalablement sélectionnés de la communauté.
- L'appareil est préférentiellement associé à un identifiant unique, et à l'issue de l'application d'un dessin sur une surface d'ongle, la tablette tactile transmet au serveur distant une information intégrant cet identifiant unique, de sorte que ledit serveur distant puisse comptabiliser le nombre de dessins appliqués par ledit appareil.
- La tablette tactile est préférentiellement associée à un identifiant unique, et à l'issue de l'application d'un dessin sur une surface d'ongle, la tablette transmettant au serveur distant une information intégrant cet identifiant unique, de sorte que ledit serveur distant puisse comptabiliser le nombre de dessins téléchargés par ladite tablette et appliqués par l'appareil.
- Le serveur distant intègre préférentiellement une application informatique comprenant des instructions pour générer, à intervalle de temps régulier prédéterminé, une facture électronique prenant en compte le nombre de dessins comptabilisés sur cet intervalle ; le serveur distant comprend en outre un moyen pour transmettre automatiquement la facture électronique générée, à un organisme payeur.
- Le serveur distant peut être connecté à plusieurs appareils pour appliquer un dessin sur au moins une surface d'ongle.

Un autre aspect de l'invention concerne un procédé pour appliquer un dessin sur au moins une surface d'ongle, comprenant les étapes consistant à :
- positionner au moins une surface d'ongle au niveau d'une tête d'impression d'un appareil,
- acquérir une image de la surface d'ongle,
- déplacer la tête d'impression en fonction de l'image de la surface d'ongle acquise et en fonction du dessin, de façon à appliquer ledit dessin sur la surface d'ongle,
- générer plusieurs dessins sous forme de données numériques, lesdits dessins étant générés par une communauté d'utilisateurs,
- transmettre ces données à au moins un serveur distant de l'appareil et les stocker de manière hiérarchisée dans des zones mémoires associées à chacun des utilisateurs de la communauté et qui sont accessibles par mot de passe et/ou identifiant,
- connecter de manière amovible une tablette tactile sur l'appareil, laquelle tablette fait office d'unité de contrôle dudit appareil,
- accéder, depuis la tablette, à au moins une des zones mémoires du serveur distant et télécharger les données numériques qui y sont stockées, lesquelles données téléchargées correspondent au dessin à appliquer sur la surface d'ongle.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 illustre un système d'impression conforme à l'invention,
- la figure 2 illustre un exemple de bibliothèque numérique de dessins affichés sur l'écran d'une tablette tactile.

### Modes préférés de réalisation de l'invention.

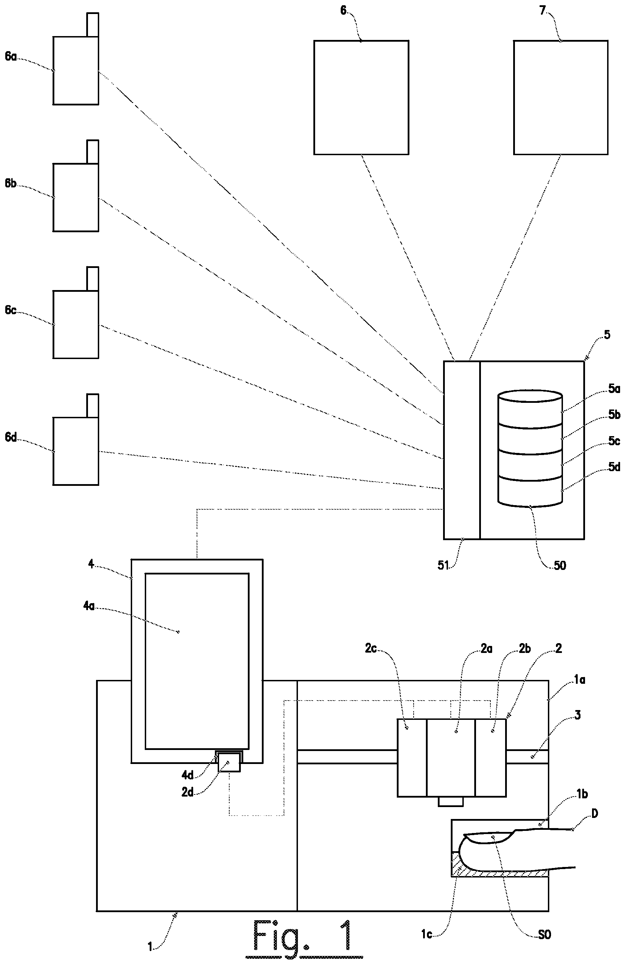

La figure 1 montre un appareil 1 pour appliquer un dessin sur au moins une surface d'ongle SO. Cet appareil 1 se présente par exemple sous la forme d'une imprimante pour ongle, du type décrit dans les documents brevets US 2013/019799 (BITHO) ou EP 1.204.340 (PEARL TECHNOLOGY) précités auxquels l'homme du métier peut se référer.

Plus particulièrement, l'appareil 1 comprend un boîtier 1a, de forme parallélépipédique, ovale, ronde ou autre, dont la face avant est pourvue d'une ouverture 1b pour le passage d'au moins un doigt D d'une main d'un utilisateur. L'ouverture 1b peut être dimensionnée pour permettre le passage d'un seul doigt, ou de plusieurs doigts et notamment de tous les doigts d'une main d'un utilisateur, et préférentiellement des deux mains (ou des pieds).

L'ouverture 1b débouche dans un logement situé à l'intérieur du boîtier 1a, et dans lequel sont positionnés le ou les doigts D. Ce logement est équipé de moyens 1c pour positionner au moins une surface d'ongle SO. Ces moyens 1c se présentent par exemple sous la forme d'un guide du type décrit dans le document brevet US 2013/019799 (BITHO) en référence aux figures 5A à 11 dudit document, ou sous la forme d'empreintes du type décrit dans le document brevet EP 1.204.340 (PEARL TECHNOLOGY) en référence aux figures 1A ou 4A dudit document. Les moyens de positionnement 1c sont configurés de manière à positionner et maintenir en position la surface d'ongle SO en direction d'un dispositif d'impression.

Sur l'exemple de la figure 1, le dispositif d'impression consiste en un chariot 2 monté sur rails 3. Le chariot 2 est équipé d'une tête d'impression 2a et éventuellement d'un dispositif optique 2b pour acquérir une image de la surface d'ongle SO.

La tête d'impression 2a utilise avantageusement un procédé à jet d'encre dans laquelle de l'encre est pulvérisée en gouttes fines et éjectée sur la surface d'ongle SO. Mais d'autres procédés d'impression peuvent être envisagés. La tête d'impression 2a est reliée à une cartouche d'encre (non représentée) et comprend par exemple une rangée de buses qui pulvérise une encre noire, une rangée de buses qui pulvérise une encre cyan, une rangée de buses qui pulvérise une encre magenta, et une rangée de buses qui pulvérise une encre jaune, etc. Les encres utilisées sont du type connu de l'homme du métier et adaptées pour être appliquées sur la surface d'un ongle.

Le dispositif optique 2b se présente par exemple sous la forme d'une cellule photo numérique ou d'une caméra CCD située à côté ou au dessus de la tête d'impression 2a et qui permet de scanner l'anatomie de la surface d'ongle SO avant, pendant ou après l'impression.

Les rails 3 sont agencés de sorte que le chariot 2 puisse se déplacer au moins dans un plan horizontal, vers la droite, vers la gauche, vers l'avant et vers l'arrière. On peut également prévoir des rails agencés de sorte que le chariot 2 se déplace dans un plan vertical, vers le haut et vers le bas. Un moteur 2c assure le déplacement du chariot 2 sur les rails 3. Dans une variante de réalisation non représentée, on peut envisager d'installer la tête d'impression 2a d'une part et le dispositif optique 2b d'autre part, chacun sur un chariot mobile motorisé. Dans une autre variante de réalisation, le dispositif optique 2b est fixe, seule la tête d'impression 2a étant mobile et associée au chariot 2.

Une tablette tactile 4 faisant office d'unité de contrôle, est connectée de manière amovible sur l'appareil 1. Par tablette tactile, on entend au sens de la présente invention tout terminal informatique portable en forme de tablette ayant pour principale interface un écran tactile 4a (ex : IPad® ou Samsung®), y compris les téléphones portables intelligents connus sous le terme anglais « Smartphones ». En pratique, la tablette 4 est pourvue d'une batterie rechargeable, d'une carte mère, d'un ou plusieurs processeurs et une zone mémoire dans laquelle sont enregistrées différentes applications informatiques dont les instructions assurent la mise en oeuvre des différentes fonctionnalités évoquées dans la présente description. Le système d'exploitation est du type connu de l'homme du métier (ex : Android®, BlackBerry OS®, iOS® ; Windows® ; etc).

La tablette tactile 4 est équipée d'une connectique 4d coopérant avec une connectique complémentaire 2d installée sur l'appareil 2, de sorte que des données puissent être échangées entre ladite tablette et les éléments dudit appareil. Il peut s'agir d'une connectique physique (ex : port USB ou port série ou lecteur de carte SD) ou d'une connectique sans fil (ex : Wifi, Bluetooth). Cette connectique autorise notamment la tablette 4 à communiquer avec le dispositif optique 2b et à générer des instructions à destination de la tête d'impression 2a et du moteur 2c. Plus particulièrement, lorsque la surface d'ongle SO est en position dans l'appareil 1, la tablette 4 commande le déplacement du chariot 2 afin que le dispositif optique 2b acquière une image de ladite surface d'ongle. Dès lors, la tablette 4 peut analyser l'anatomie de la surface d'ongle SO scannée et mettre à l'échelle le dessin préalablement choisi par l'utilisateur, afin de l'ajuster à ladite surface. La tablette 4 commande ensuite le déplacement de la tête d'impression 2a en fonction de l'image de la surface d'ongle SO acquise et en fonction du dessin choisi, de façon à appliquer ce dernier sur la surface d'ongle.

Sur la figure 1, un moins un serveur 5, distant de l'appareil 1, intègre au moins une base de données 50 dans laquelle sont susceptibles d'être enregistrées des données numériques. Plusieurs serveurs distants peuvent être utilisés dans le but d'optimiser l'archivage et la sécurisation des données. D'une manière bien connue, un serveur 5 se présente typiquement sous la forme d'un ordinateur équipé d'un ou plusieurs processeurs 51 et d'au moins une mémoire dans laquelle sont enregistrées différentes applications informatiques dont les instructions assurent la mise en oeuvre des fonctionnalités évoquées ci-après. Le serveur distant 5 peut être géré par un ou plusieurs opérateurs qui sont par exemple propriétaires des appareils 1. Le terme « serveur distant » doit également être entendu au sens de la présente invention comme un espace de stockage connu sous le terme anglais « Cloud ».

Une série de terminaux 6a, 6b, 6c, 6d mobiles ou fixes appartenant à une communauté d'utilisateurs (par exemple la communauté Facebook®), communiquent, par l'intermédiaire d'un réseau internet, avec le serveur distant 5. En pratique, les terminaux 6a, 6b, 6c, 6d et le serveur 5 sont chacun pourvu d'un émetteur/récepteur assurant ces communications via un modem, une connexion Ethernet, une connexion Wifi, ou autre. De cette façon, des données peuvent transiter depuis les terminaux 6a, 6b, 6c, 6d vers le serveur distant 5 et d'autres données peuvent transiter depuis ledit serveur vers lesdits terminaux. Les données transitant entre un terminal 6a, 6b, 6c, 6d et le serveur distant 5 sont préférentiellement échangées au travers d'une connexion internet sécurisée de type HTTP-S..

Les terminaux 6a, 6b, 6c, 6d peuvent être des tablettes tactiles, des téléphones mobiles, des appareils du type assistant digital personnel (PDA), des appareils du type BlackBerry®, des ordinateurs PC portables ou fixes, ou tous autres terminaux de communication aptes à se connecter dans un réseau de communication internet. Chaque terminal 6a, 6b, 6c, 6d intègre au moins un moyen pour générer un dessin sous forme de données numériques. Il s'agit par exemple d'un appareil photos intégré ou d'un logiciel de dessins de type PAINT®. Par « dessins », on entend au sens de la présente invention, tout motif susceptible d'être imprimé sur la surface d'ongle SO : photo, portait, dessin artistique, figure stylisée de visage type smiley, icône, logo, drapeau, texte, toute forme complexe, etc. Lorsque le dessin est généré, les données numériques associées sont transmises au serveur distant 5, automatiquement, ou en réponse à une action spécifique de l'utilisateur sur son terminal, par exemple un appui sur une touche dédiée. Les terminaux 6a, 6b, 6c, 6d sont préférentiellement associés à un identifiant unique permettant d'identifier l'utilisateur qui à généré le dessin. Cet identifiant se présente par exemple sous la forme d'une suite de caractères numériques ou alphanumériques.

Lorsque le serveur distant 5 reçoit ces données, il les stocke de manière hiérarchisée dans des zones mémoires 5a, 5b, 5c, 5d de la base de données 50. Ces zones mémoires 5a, 5b, 5c, 5d sont associées à chacun des utilisateurs de la communauté et sont accessibles par mot de passe et/ou identifiant. En pratique, chaque utilisateur de la communauté dispose de sa propre zone mémoire, laquelle zone est repérée par un identifiant unique qui correspond à celui permettant d'identifier l'utilisateur qui à généré le dessin. Lorsque les données numériques sont transmises par un terminal 6a, 6b, 6c, 6d, ces données sont avantageusement associées à l'identifiant dudit terminal et/ou de son utilisateur. En analysant l'ensemble des données reçues, le serveur 5 peut ainsi extraire l'identifiant et diriger les données numériques qui y sont associées vers la zone mémoire 5a, 5b, 5c, 5d affectée à l'utilisateur du terminal 6a, 6b, 6c, 6d qui a émis lesdites données. Chaque utilisateur peut ainsi se constituer en temps réel et de manière quasi-illimitée une bibliothèque de dessins susceptibles d'être appliqués sur une surface d'ongle.

La tablette 4 se connecte automatiquement, via une connexion Internet, au serveur 5 de manière à pouvoir accéder à au moins une des zones mémoires 5a, 5b, 5c, 5d et télécharger les données numériques qui y sont stockées, lesquels données téléchargées correspondent au dessin à appliquer sur la surface d'ongle SO. Pour ce faire, en réponse à la connexion de la tablette 4, le serveur distant 5 peut émettre une requête à destination de ladite tablette, sollicitant un mot de passe et/ou un identifiant. Ce dernier correspond à l'identifiant évoqué précédemment en rapport avec les terminaux 6a, 6b, 6c, 6d. L'utilisateur de la tablette 4 renseigne les informations demandées depuis ladite tablette et les transmet au serveur distant 5. Après vérification de ces informations, le serveur distant 5 autorise l'accès à la zone mémoire 5a, 5b, 5c, 5d qui correspond à l'identifiant renseigné. Cet identifiant peut éventuellement être contenu dans une carte NFC, auquel cas il suffit à l'utilisateur de présenter cette carte devant la tablette 4 pour autoriser cette identification. La tablette 4 a ainsi accès à tous les dessins stockés dans la zone mémoire autorisée. Chaque utilisateur (ex : « Julie ») de la communauté peut autoriser un ou plusieurs autres utilisateurs de ladite communauté (ex : « Marie » et « Bénédicte ») à accéder à sa propre zone mémoire. Le serveur distant 5 accorde dans ce cas un droit spécifique à « Marie » et « Bénédicte » pour qu'elles puissent accéder aux données stockées dans la zone mémoire de « Julie ». Lorsque « Marie » se connecte, via sa tablette 4, au serveur distant 5 et que l'accès à la base de données 5 lui est accordé, ladite tablette a non seulement accès aux données stockées dans la zone mémoire qui lui est dédiée (par exemple la zone mémoire 5a) mais également la zone mémoire de « Julie » (par exemple la zone mémoire 5b).

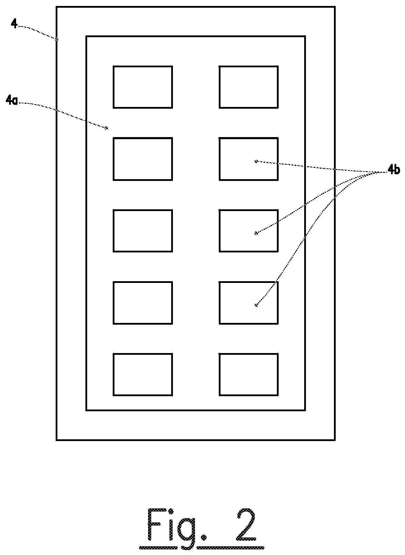

En se connectant au serveur distant 5, la tablette 4 voit apparaitre sur son écran 4a une bibliothèque numérique générée par ledit serveur. Cette bibliothèque affiche tous les dessins associés aux données numériques contenues dans la ou les zones mémoires 5a et/ou 5b et/ou 5c et/ou 5d dont l'accès est autorisé par le serveur distant 5. En se rapportant à la figure 2, les dessins sont affichés sous forme d'éléments sélectionnables 4b, par exemple des icônes sélectionnables par un appui sur l'écran 4a. La sélection d'un élément sélectionnable 4b génère une information de commande transmise, depuis la tablette 4, vers le serveur distant 5. Ce dernier transfère à la tablette 4 toutes les données numériques correspondant aux dessins sélectionnés, lesquelles données sont ainsi téléchargées dans ladite tablette. Ce téléchargement peut intervenir en réponse à la réception de l'information de commande par le serveur 5. Le téléchargement peut également intervenir antérieurement, par exemple dès l'étape d'identification, auquel cas toutes les données correspondant aux dessins répertoriés dans la bibliothèque sont préalablement téléchargées, mais seules celles correspondant aux dessins sélectionnés étant activées. Ces données téléchargées sont maintenant des données d'impressions prises en compte pour piloter le chariot 2 comme expliqué précédemment afin d'appliquer ce dessin sur la surface d'ongle SO.

A l'issue de l'application du dessin sélectionné sur la surface d'ongle SO, un utilisateur peut trouver avantageux de faire partager, aux autres membres de la communauté, une photo de ses ongles ainsi décorés. Pour reprendre l'exemple cité précédemment, « Marie » peut vouloir transmettre une photo de ses ongles à « Julie » et « Bénédicte » et même à l'ensemble de la communauté. Pour ce faire, la tablette 4 génère une instruction pour commander le dispositif optique 2b afin que ce dernier acquière, sous forme de données numériques, une image de la surface d'ongle SO sur laquelle est appliqué le dessin. La tablette 4 transfère ensuite au serveur distant 5, les données numériques acquises. Le serveur distant 5 stocke ces données soit dans la zone mémoire associée à l'utilisateur de la tablette tactile 4 connectée à l'appareil 1 (par exemple la zone mémoire 5a dédiée à « Marie »), soit dans chacune des zones mémoires 5a, 5b, 5c, 5d, soit dans les zones mémoires d'utilisateurs préalablement sélectionnés de la communauté (par exemple la zone mémoire 5a dédiée à « Marie » et la zone mémoire 5c dédiée à « Bénédicte »). Le ou les utilisateurs des zones mémoires dans lesquelles sont enregistrées les données numériques acquises par le dispositif optique 2b, peuvent alors télécharger ces données pour appliquer le dessin correspondant sur leurs ongles.

L'appareil 1 est avantageusement associé à un identifiant unique, typiquement une suite de caractères numériques ou alpha numériques. A l'issue de l'application d'un dessin sur une surface d'ongle SO, la tablette 4 génère une instruction pour transmettre au serveur distant 5 une information intégrant cet identifiant unique. Le serveur distant 5 est ainsi averti en temps réel que l'appareil 1 à réalisé l'application d'un dessin sur la surface d'ongle SO et peut comptabiliser le nombre de dessins appliqués par ledit appareil. Le serveur distant 5 génère alors, à intervalle de temps régulier prédéterminé (par exemple quotidiennement, mensuellement, trimestriellement, ou annuellement), une facture électronique prenant en compte le nombre de dessins comptabilisés sur cet intervalle. Dès lors qu'elle est générée, cette facture est ensuite transmise automatiquement à un organisme payeur 7 (figure 1) au travers d'une connexion internet sécurisée de type HTTP-S. L'organisme payeur 7 consiste par exemple en un institut de beauté dans lequel est installé l'appareil 1.

Dans une variante de réalisation, c'est l'utilisateur de la tablette 4 qui est facturé. A l'issue de l'application d'un dessin sur une surface d'ongle SO, la tablette 4 génère une instruction pour transmettre au serveur distant 5 une information intégrant un identifiant unique associé à ladite tablette. Le serveur distant 5 peut alors comptabiliser le nombre de dessins téléchargés par ladite tablette et appliqués par l'appareil 1. Comme décrit au paragraphe précédent, le serveur distant 5 génère une facture électronique prenant en compte le nombre de dessins comptabilisés sur un intervalle de temps régulier prédéterminé, et la transmet automatiquement à un organisme payeur 6, qui est dans ce cas, l'utilisateur de la tablette 4.

La tablette 4 peut transférer au serveur distant 5, d'autres informations relatives au fonctionnement de l'appareil 1 telles qu'une panne ou un niveau d'encre bas dans les cartouches. Le serveur distant 5 peut alors avertir un intervenant afin de remédier aux problèmes constatés et/ou assurer la maintenance. En outre, un organisme développeur 8 connecté au serveur distant 5, peut contrôler ledit serveur et le mettre à jour régulièrement.

L'agencement des différents éléments du système dans les modes de réalisation décrits ci-dessus ne doit pas être compris comme exigeant un tel agencement dans toutes les implémentations. En tout état de cause, on comprendra que diverses modifications peuvent être apportées au système et au procédé, sans s'écarter de l'esprit et de la portée de l'invention. En particulier, le serveur distant 5 peut être connecté à plusieurs appareils similaires à l'appareil 1 décrit précédemment. Egalement, les données numériques peuvent être stockées dans plusieurs serveurs distants. L'invention doit en outre être comprise comme couvrant l'application d'un dessin sur la surface d'un ongle artificiel destiné à être collé sur un ongle naturel.

## Revendications

1. Système d'impression comprenant au moins un appareil (1) pour appliquer un dessin sur au moins une surface d'ongle (SO), lequel appareil comporte :
- des moyens (1c) pour positionner au moins une surface d'ongle (SO),
- un dispositif optique (2b),
- une tête d'impression (2a),
- des moyens (2, 2c, 3) pour déplacer la tête d'impression (2a) afin d'appliquer un dessin sur la surface d'ongle (SO),
- une unité de contrôle intégrant :
o un moyen pour communiquer avec le dispositif optique (2b),
o une application informatique comprenant des instructions pour commander les moyens (2, 2c, 3) de déplacement en fonction du dessin, de façon à diriger la tête d'impression (2a) afin qu'elle applique ledit dessin sur la surface d'ongle (SO),
**se caractérisant par le fait que :**
- le dispositif optique (2b) est configuré pour acquérir une image de la surface d'ongle(SO),
- les instructions comprises dans l'application informatique de l'unité de contrôle sont en outre adaptées pour commander les moyens (2, 2c, 3) de déplacement en fonction de l'image de la surface d'ongle acquise,
- le système comporte en outre :
∘ au moins un serveur (5) distant de l'appareil (1), lequel serveur intègre au moins une base de données (50) dans laquelle sont enregistrées des données numériques,
∘ une série de terminaux (6a, 6b, 6c, 6d) appartenant à une communauté d'utilisateurs, chaque dit terminal intégrant au moins un moyen pour générer un dessin sous forme de données numériques, chaque dit terminal comportant en outre un moyen pour communiquer, par l'intermédiaire d'un réseau internet, avec le serveur distant (5), de sorte que lesdites données générées soient transmises audit serveur distant,
- le serveur distant (5) intègre une application informatique comprenant des instructions pour stocker de manière hiérarchisée les données numériques reçues, lesdites données étant stockées dans des zones mémoires (5a, 5b, 5c, 5d) de la base de données (50), lesquelles zones mémoires sont associées à chacun des utilisateurs de la communauté et sont accessibles par mot de passe et/ou identifiant,
- l'unité de contrôle se présente sous la forme d'une tablette tactile (4) connectée de manière amovible sur l'appareil, laquelle tablette comporte un moyen pour communiquer, par l'intermédiaire d'un réseau internet, avec le serveur distant (5), de sorte que ladite tablette puisse accéder à au moins une des zones mémoires (5a, 5b, 5c, 5d) et télécharger les données numériques qui y sont stockées, lesquelles données téléchargées correspondent au dessin à appliquer sur la surface d'ongle (SO).

2. Système selon la revendication 1, dans lequel la tablette tactile (4) affiche les données numériques contenues dans la zone mémoire du serveur distant, sous forme de dessins accessibles dans une bibliothèque numérique.

3. Système selon la revendication 1, dans lequel la tablette tactile (4) intègre une application informatique comprenant des instructions pour :
- commander le dispositif optique (2b) pour acquérir, sous forme de données numériques, une image de la surface d'ongle (SO) sur laquelle est appliqué le dessin,
- transférer au serveur distant (5), les données numériques acquises.

4. Système selon la revendication 3, dans lequel le serveur distant (5) intègre une application informatique comprenant des instructions pour stocker les données numériques reçues, dans la zone mémoire (5a, 5b, 5c, 5d) associée à l'utilisateur de la tablette tactile (4) connectée à l'appareil (1).

5. Système selon la revendication 3, dans lequel le serveur distant (5) intègre une application informatique comprenant des instructions pour stocker les données numériques reçues, dans chacune des zones mémoires (5a, 5b, 5c, 5d) ou dans les zones mémoires d'utilisateurs préalablement sélectionnés de la communauté.

6. Système selon l'une des revendications précédentes, dans lequel :
- l'appareil (1) est associé à un identifiant unique,
- à l'issue de l'application d'un dessin sur une surface d'ongle (SO), la tablette tactile (4) transmet au serveur distant (5) une information intégrant l'identifiant unique de l'appareil (1), de sorte que ledit serveur distant puisse comptabiliser le nombre de dessins appliqués par ledit appareil.

7. Système selon l'une des revendications précédentes, dans lequel :
- la tablette tactile (4) est associée à un identifiant unique,
- à l'issue de l'application d'un dessin sur une surface d'ongle (SO), la tablette tactile (4) transmet au serveur distant (5) une information intégrant cet identifiant unique, de sorte que ledit serveur distant puisse comptabiliser le nombre de dessins téléchargés par ladite tablette et appliqués par l'appareil (1).

8. Système selon l'une des revendications 6 ou 7, dans lequel :
- le serveur distant (5) intègre une application informatique comprenant des instructions pour générer, à intervalle de temps régulier prédéterminé, une facture électronique prenant en compte le nombre de dessins comptabilisés sur cet intervalle,
- le serveur distant (5) comprend un moyen pour transmettre automatiquement la facture électronique générée, à un organisme payeur (7).

9. Système selon l'une des revendications précédentes, dans lequel le serveur distant (5) est connecté à plusieurs appareils (1) pour appliquer un dessin sur au moins une surface d'ongle.

10. Procédé pour appliquer un dessin sur au moins une surface d'ongle, comprenant les étapes consistant à :
- positionner au moins une surface d'ongle (SO) au niveau d'une tête d'impression (2a) d'un appareil (1),
- acquérir une image de la surface d'ongle (SO),
- déplacer la tête d'impression (2a) en fonction de l'image de la surface d'ongle acquise et en fonction du dessin, de façon à appliquer ledit dessin sur la surface d'ongle (SO),
- générer plusieurs dessins sous forme de données numériques, lesdits dessins étant générés par une communauté d'utilisateurs,
- transmettre ces données à au moins un serveur (5) distant de l'appareil (1) et les stocker de manière hiérarchisée dans des zones mémoires (5a, 5b, 5c, 5d) associées à chacun des utilisateurs de la communauté et qui sont accessibles par mot de passe et/ou identifiant,
- connecter de manière amovible une tablette tactile (4) sur l'appareil (1), laquelle tablette fait office d'unité de contrôle dudit appareil,
- accéder, depuis la tablette (4), à au moins une des zones mémoires (5a, 5b, 5c, 5d) du serveur distant (5) et télécharger les données numériques qui y sont stockées, lesquelles données téléchargées correspondent au dessin à appliquer sur la surface d'ongle (SO).

## Patentansprüche

1. Drucksystem, umfassend mindestens ein Gerät (1), um ein Design auf mindestens eine Nageloberfläche (SO) aufzubringen, wobei das Gerät umfasst:
- Mittel (1c), um mindestens eine Nageloberfläche (SO) zu positionieren,
- eine optische Vorrichtung (2b),
- einen Druckkopf (2a),
- Mittel (2, 2c, 3), um den Druckkopf (2a) zu verschieben, um ein Design auf die Nageloberfläche (SO) aufzubringen,
- eine Kontrolleinheit, umfassend:
∘ ein Mittel, um mit der optischen Vorrichtung (2b) zu kommunizieren,
∘ eine Informatikanwendung, umfassend Befehle, um die Verschiebemittel (2, 2c, 3) in Abhängigkeit von dem Design zu steuern, um den Druckkopf (2a) derart zu lenken, dass er das Design auf die Nageloberfläche (SO) aufbringt,
**dadurch gekennzeichnet, dass**:
- die optische Vorrichtung (2b) dazu vorgesehen ist, ein Bild von der Nageloberfläche (SO) zu erfassen,
- die Befehle, die in der Informatikanwendung der Kontrolleinheit enthalten sind, ferner dazu vorgesehen sind, die Verschiebemittel (2, 2c, 3) in Abhängigkeit von dem Bild der erfassten Nageloberfläche zu steuern,
- wobei das System ferner umfasst:
∘ mindestens einen vom Gerät (1) entfernten Server (5), wobei der Server mindestens eine Datenbasis (50) umfasst, in der digitale Daten aufgezeichnet sind,
∘ eine Reihe von Endgeräten (6a, 6b, 6c, 6d), die einer Benutzercommunity angehören, wobei jedes Endgerät mindestens ein Mittel umfasst, um ein Design in Form von digitalen Daten zu erzeugen,
wobei jedes Endgerät ferner ein Mittel umfasst, um über ein Internet mit dem entfernten Server (5) zu kommunizieren, so dass die erzeugten Daten an den entfernten Server übertragen werden,
- der entfernte Server (5) eine Informatikanwendung umfasst, die Befehle umfasst, um die empfangenen digitalen Daten hierarchisch zu speichern, wobei die Daten in Speicherzonen (5a, 5b, 5c, 5d) der Datenbasis (50) gespeichert werden, wobei die Speicherzonen jedem der Benutzer der Community zugeordnet und durch ein Passwort und/oder einen Identifikator zugänglich sind,
- die Kontrolleinheit in Form eines Tablets (4), das abnehmbar an das Gerät angeschlossen ist, vorhanden ist, wobei das Tablet ein Mittel umfasst, um über ein Internet mit dem entfernten Server (5) zu kommunizieren, so dass das Tablet auf mindestens eine der Speicherzonen (5a, 5b, 5c, 5d) zugreifen und die digitalen Daten, die hier gespeichert sind, fernladen kann, wobei die ferngeladenen Daten dem auf die Nageloberfläche (SO) aufzubringenden Design entsprechen.

2. System nach Anspruch 1, bei dem das Tablet (4) die digitalen Daten, die in der Speicherzone des entfernten Servers enthalten sind, in Form von in einer digitalen Bibliothek zugänglichen Designs anzeigt.

3. System nach Anspruch 1, bei dem das Tablet (4) eine Informatikanwendung umfasst, umfassend Befehle, um:
- die optische Vorrichtung (2b) zu steuern, um in Form von digitalen Daten ein Bild der Nageloberfläche (SO), auf die das Design aufgebracht wird, zu erfassen,
- an den entfernten Server (5) die erfassten digitalen Daten zu übertragen.

4. System nach Anspruch 3, bei dem der entfernte Server (5) eine Informatikanwendung umfasst, umfassend Befehle, um die empfangenen digitalen Daten in der Speicherzone (5a, 5b, 5c, 5d), die dem Benutzer des an das Gerät (1) angeschlossenen Tablets (4) zugeordnet ist, zu speichern.

5. System nach Anspruch 3, bei dem der entfernte Server (5) eine Informatikanwendung umfasst, umfassend Befehle, um die empfangenen digitalen Daten in jeder der Speicherzonen (5a, 5b, 5c, 5d) oder in den Speicherzonen von vorher ausgewählten Benutzern der Community zu speichern.

6. System nach einem der vorhergehenden Ansprüche, bei dem:
- das Gerät (1) einem einzigen Identifikator zugeordnet ist,
- nach dem Aufbringen eines Designs auf eine Nageloberfläche (SO) das Tablet (4) an den entfernten Server (5) eine Information überträgt, die den einzigen Identifikator des Geräts (1) umfasst, so dass der entfernte Server die Anzahl von von dem Gerät aufgebrachten Designs verbuchen kann.

7. System nach einem der vorhergehenden Ansprüche, bei dem:
- das Tablet (4) einem einzigen Identifikator zugeordnet ist,
- nach dem Aufbringen eines Designs auf eine Nageloberfläche (SO) das Tablet (4) an den entfernten Server (5) eine Information überträgt, die diesen einzigen Identifikator umfasst, so dass der entfernte Server die Anzahl von von dem Tablet ferngeladenen und von dem Gerät (1) aufgebrachten Designs verbuchen kann.

8. System nach einem der Ansprüche 6 oder 7, bei dem:
- der entfernte Server (5) eine Informatikanwendung umfasst, umfassend Befehle, um in einem vorbestimmten regelmäßigen Zeitintervall eine elektronische Rechnung zu erstellen, die die Anzahl von in diesem Intervall verbuchten Designs berücksichtigt,
- der entfernte Server (5) ein Mittel umfasst, um automatisch die erstellte elektronische Rechnung an eine Zahlstelle (7) zu übertragen.

9. System nach einem der vorhergehenden Ansprüche, bei dem der entfernte Server (5) an mehrere Geräte (1) angeschlossen ist, um ein Design auf mindestens eine Nageloberfläche aufzubringen.

10. Verfahren, um ein Design auf mindestens eine Nageloberfläche aufzubringen, umfassend die folgenden Schritte, darin bestehend:
- mindestens eine Nageloberfläche (SO) im Bereich eines Druckkopfes (2a) eines Geräts (1) zu positionieren,
- ein Bild der Nageloberfläche (SO) zu erfassen,
- den Druckkopf (2a) in Abhängigkeit von dem erfassten Bild der Nageloberfläche und in Abhängigkeit von dem Design zu verschieben, um das Design auf die Nageloberfläche (SO) aufzubringen,
- mehrere Designs in Form von digitalen Daten zu erzeugen, wobei die Designs von einer Benutzercommunity erzeugt werden,
- diese Daten an mindestens einen vom Gerät (1) entfernten Server (5) zu übertragen, und sie hierarchisch in Speicherzonen (5a, 5b, 5c, 5d) zu speichern, die jedem der Benutzer der Community zugeordnet und durch ein Passwort und/oder einen Identifikator zugänglich sind,
- ein Tablet (4) abnehmbar an das Gerät (1) anzuschließen, wobei das Tablet als Kontrolleinheit des Geräts dient,
- vom Tablet (4) aus auf mindestens eine der Speicherzonen (5a, 5b, 5c, 5d) des entfernten Servers (5) zuzugreifen und die digitalen Daten, die hier gespeichert sind, fernzuladen, wobei die ferngeladenen Daten dem auf die Nageloberfläche (SO) aufzubringenden Design entsprechen.

## Claims

1. Printing system comprising at least one apparatus (1) for applying a design to at least one fingernail/toenail surface (SO), which apparatus comprises:
- means (1c) for positioning at least one fingernail/toenail surface (SO),
- an optical device (2b),
- a print head (2a),
- means (2, 2c, 3) for displacing the print head (2a) in order to apply a design to the fingernail/toenail surface (SO),
- a control unit incorporating:
∘ a means for communicating with the optical device (2b),
∘ a computer application comprising instructions for controlling the displacement means (2, 2c, 3) according to the design, so as to direct the print head (2a) in order for it to apply said design to the fingernail/toenail surface (SO),
being **characterized in that**:
- the optical device (2b) is configured to acquire an image of the fingernail/toenail surface (SO),
- the instructions included in the computer application of the control unit are also adapted to control the displacement means (2, 2c, 3) according to the image of the fingernail/toenail surface acquired,
- the system further comprises:
∘ at least one server (5) remote from the apparatus (1), which server incorporates at least one database (50) in which digital data are stored,
∘ a series of terminals (6a, 6b, 6c, 6d) belonging to a community of users, each said terminal incorporating at least one means for generating a design in the form of digital data, each said terminal also comprising a means for communicating, via an Internet network, with the remote server (5), so that said data generated are transmitted to said remote server,
- the remote server (5) incorporates a computer application comprising instructions for storing the received digital data hierarchically, said data being stored in memory areas (5a, 5b, 5c, 5d) of the database (50), which memory areas are associated with each of the users of the community and are accessible by password and/or identifier,
- the control unit takes the form of a touch tablet (4) removably connected to the apparatus, which tablet comprises a means for communicating, via an Internet network, with the remote server (5), so that said tablet can access at least one of the memory areas (5a, 5b, 5c, 5d) and download the digital data which are stored therein, which downloaded data correspond to the design to be applied to the fingernail/toenail surface (SO).

2. System according to Claim 1, in which the touch tablet (4) displays the digital data contained in the memory area of the remote server, in the form of designs accessible in a digital library.

3. System according to Claim 1, in which the touch tablet (4) incorporates a computer application comprising instructions for:
- controlling the optical device (2b) to acquire, in the form of digital data, an image of the fingernail/toenail surface (SO) on which the design is applied,
- transfer the digital data acquired to the remote server (5).

4. System according to Claim 3, in which the remote server (5) incorporates a computer application comprising instructions for storing the digital data received, in the memory area (5a, 5b, 5c, 5d) associated with the user of the touch tablet (4) connected to the apparatus (1).

5. System according to Claim 3, in which the remote server (5) incorporates a computer application comprising instructions for storing the digital data received, in each of the memory areas (5a, 5b, 5c, 5d) or in the memory areas of users previously selected in the community.

6. System according to one of the preceding claims, in which:
- the apparatus (1) is associated with a unique identifier,
- on completion of the application of a design on a fingernail/toenail surface (SO), the touch tablet (4) transmits information incorporating the unique identifier of the apparatus (1) to the remote server (5), such that said remote server can count the number of designs applied by said apparatus.

7. System according to one of the preceding claims, in which:
- the touch tablet (4) is associated with a unique identifier,
- on completion of the application of a design on a fingernail/toenail surface (SO), the touch tablet (4) transmits information incorporating this unique identifier to the remote server (5), such that said remote server can count the number of designs downloaded by said tablet and applied by the apparatus (1).

8. System according to one of Claims 6 or 7, in which:
- the remote server (5) incorporates a computer application comprising instructions for generating, at predetermined regular time intervals, an electronic bill taking into account the number of designs counted over this interval,
- the remote server (5) comprises a means for automatically transmitting the electronic bill generated to a paying organization (7).

9. System according to one of the preceding claims, in which the remote server (5) is connected to several apparatuses (1) for applying a design on at least one fingernail/toenail surface.

10. Method for applying a design on at least one fingernail/toenail surface, comprising the steps consisting in:
- positioning at least one fingernail/toenail surface (SO) level with a print head (2a) of an apparatus (1),
- acquiring an image of the fingernail/toenail surface (SO),
- displacing the print head (2a) according to the image of the fingernail/toenail surface acquired and according to the design, so as to apply said design on the fingernail/toenail surface (SO),
- generating several designs in the form of digital data, said designs being generated by a community of users,
- transmitting these data to at least one server (5) remote from the apparatus (1) and storing them hierarchically in memory areas (5a, 5b, 5c, 5d) associated with each of the users of the community and which are accessible by password and/or identifier,
- removably connecting a touch tablet (4) to the apparatus (1), which tablet serves as control unit for said apparatus,
- accessing, from the tablet (4), at least one of the memory areas (5a, 5b, 5c, 5d) of the remote server (5) and downloading the digital data which are stored therein, which downloaded data correspond to the design to be applied to the fingernail/toenail surface (SO).
